# EUROPEAN PATENT SPECIFICATION

(11) **EP 3 616 509 B1**
(45) Date of publication and mention of the grant of the patent: **05.07.2023**
(21) Application number: 19250006.4
(22) Date of filing: 20.06.2019
(51) Int. Cl.: A01K 97/06

(54) **A CONTAINER FOR STORING AND DISPLAYING ANGLING RIGS**
BEHÄLTER ZUR AUFBEWAHRUNG UND AUSLAGE VON ANGELRUTEN
RÉCIPIENT DE STOCKAGE ET D'AFFICHAGE D'ENGIN DE PÊCHE

(30) Priority: 23.08.2018 GB 201813814
(43) Date of publication of application: 04.03.2020
(73) Proprietor: Korda Developments Limited, Basildon, Essex SS14 0HW (GB)
(72) Inventor: Brandon, Dalton, Huntingdon, Cambridgeshire PE28 3AY (GB); Rooney, Adam, Nuneaton, Warwickshire CV11 6DE (GB)
(74) Representative: Burnett, Christopher James

(56) References cited:
- CN-U- 206 462 240
- CN-Y- 2 532 692
- CN-Y- 2 643 661
- GB-A- 2 428 173
- GB-A- 2 557 941

## Description

This invention relates to a container for storing and displaying angling rigs for use by anglers.

Anglers typically use different types of angling rigs when fishing. The angling rigs may contain different rig components such for example as different lengths of rig line, and different type of hooks. The hooks may be different hook shapes. Alternatively or additionally, the hooks may have barbs or the hooks may be without barbs. When the hooks have barbs, then different types of barbs may be employed.

When anglers are fishing in competitions, they may need to change their angling rigs quickly. A quick change of an angling rig may be crucial in catching fish at any particular time. The angling rigs are stored in containers. GB2428173 A discloses a known container comprising first and second container parts, and a single slot and ratchet arrangement for adjustably mounting angling rigs. The known containers do not enable the angling rigs to be stored and displayed sufficiently clearly for swift selection by anglers, for example in competitions.

It is an aim of the present invention to reduce the above mentioned problem.

Accordingly, the present invention provides a container for storing and displaying angling rigs for use by anglers, which container comprises:
(i) a first container part which is hinged to a second container part; and
(ii) a plurality of mounting formations which are arranged in rows in the first and second container parts and which are for receiving the angling rigs,
and the container being such that:
(iii) the mounting formations are slideably adjustable in the first and second container parts;
(iv) the container includes slide formations in the first and second container parts;
(v) the mounting formations are slideable on the slide formations;
(vi) the slide formations are interrupted along their length by interrupting members which cause the mounting formations to be incrementally adjustable in position along the slide formations for receiving different lengths of the angling rigs; and
(vii) the slide formations are arranged in pairs, each pair of the slide formations is spaced apart, each pair of the slide formations receives a plurality of the mounting formations, a first end portion of each of the plurality of mounting formations fits on one of the pair of the slide formations, and a second end portion of each of the plurality of mounting formations fits on the other one of the pair of the slide formations.

The container of the present invention is advantageous in that the mounting formations are able to mount and display the angling rigs. The slideability of the mounting formations enables the mounting formations to be spaced apart by distances which are optimal for the desired display of different types of rigs, for example their different lengths and/or rigs with different rig components.

The slide formations may extend longitudinally in the first and second container parts. If desired however the slide formation may extend in other directions, for example transverse of the first and second container parts.

The interrupting members may be abutment members which extend from one side of the slide formations. Other types of interrupting members may be employed. The interrupting members may extend from either side or both sides of the slide formations.

The container may be one in which the mounting formations comprise recesses for receiving the slide formations. Other constructions may be employed so that, for example, the slide formations may comprise recesses for receiving the mounting formations.

The mounting formations may comprise upstanding post members for receiving component parts of the angling rigs. Other constructions for the mounting formations may be employed.

The container may include a first frame which is in the first container part and which extends around the internal periphery of the first container part, a second frame which is in the second container part and which extends around the internal periphery of the second container part, in which the first frame comprises a first measurement scale for enabling a user to know the distance apart of the mounting formations in the first container part, and in which the second frame comprises a second measurement scale for enabling a user to know the distance apart of the mounting formations in the second container part. The first measurement scale may be an imperial measurement scale, and the second measurement scale may be a metric scale, or vice versa.

The container may be one in which the first frame comprises first post members at each end, with the first post members being for receiving component parts of the angling rigs, and in which the second frame comprises second post members at each end, with the second post members being for receiving components parts of the angling rigs. Various types of post members may be employed.

The first frame may comprise a first frame member which is positioned inwardly of the periphery of the first frame and which extends along the length of the first frame, and the second frame may comprise a second frame member which is positioned inwardly of the periphery of the second frame and which extends along the length of the second frame. The first and second frame members may be strips, bars or other configurations.

The container may be one in which the first frame member comprises a plurality of third post members for receiving component parts of the angling rigs. Additionally or alternatively, the first frame member may comprise a plurality of first slots for receiving component parts of the angling rigs.

The container may be one in which the second frame member includes a plurality of second slots for receiving component parts of the angling rigs.

The container may include a release tool for removing the mounting formations from the first and second container parts. The release tool may be a hand held lever comprising a shank which is for enabling the release tool to be held, and a hook which is at one end of the shank and which is for hooking under the mounting formations in order to remove the mounting formations.

The container is preferably in the form of a case. The container may be of other types and shapes if desired.

The container may be made of plastics materials. Such a container is light, easily manufactured, and easy to keep clean. When the container is made of one or more plastics materials, then the various component parts of the container may be separately moulded and then assembled together. The container may be made of other materials if desired.

Embodiments of the invention will now be described solely by way of example and with reference to the accompanying drawings in which:
Figure 1 is a view from one end and above of a container of the present invention for storing and displaying angling rigs for use by anglers;

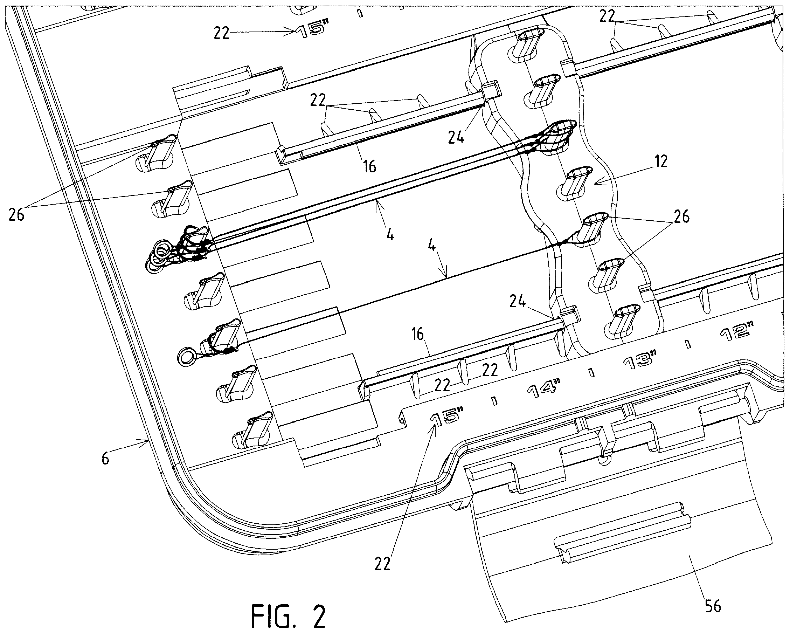

Figure 2 is an enlarged view of the marked part in the bottom left hand corner of Figure 1;

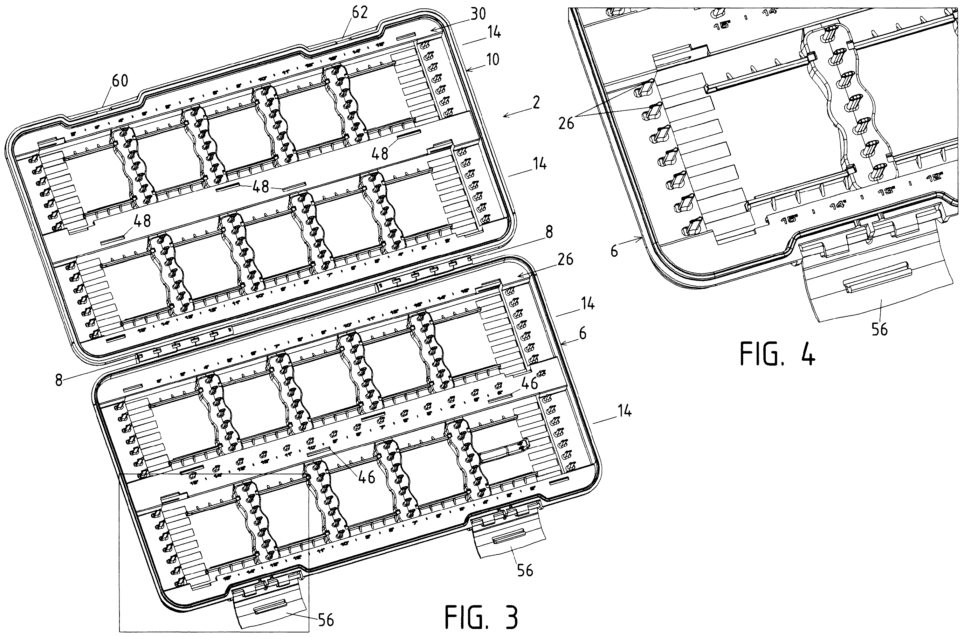

Figure 3 is a view like Figure 1 but without the angling rigs;
Figure 4 is an enlarged view of the marked part in the bottom left hand corner of Figure 3;

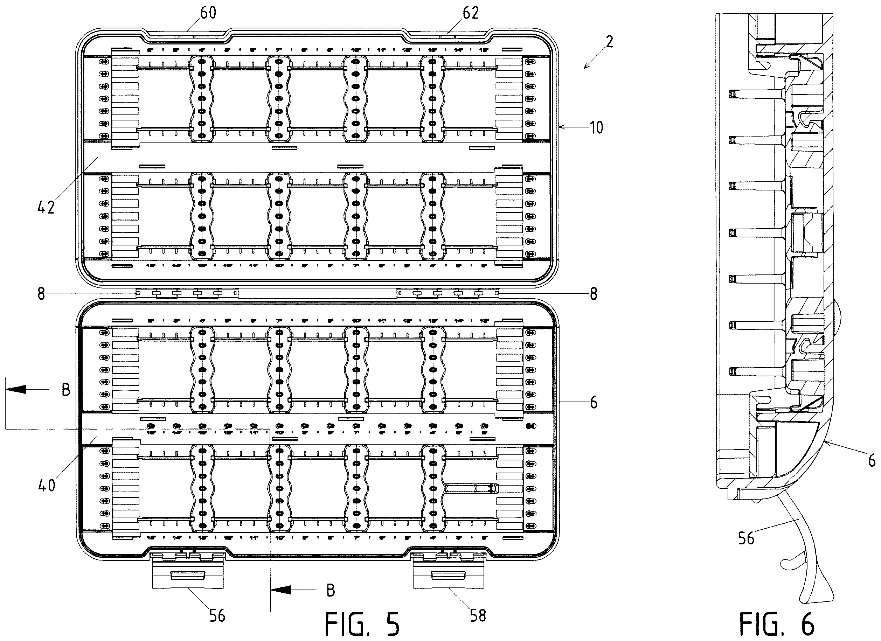

Figure 5 is a top view of the container as shown in Figure 3;
Figure 6 is a section on the line B - B shown in Figure 5;
Figure 7 is a view like Figure 3 and also shows a release tool in use;
Figure 8 is an enlarged view of the marked left hand corner part of Figure 7;
Figure 9 is a view like Figure 7 and shows the release tool in a further stage of operation;
Figure 10 is an enlarged view of the marked left hand corner part of Figure 9;
Figure 11 is a view from one end and below of the container shown in Figure 1 and in an open condition;

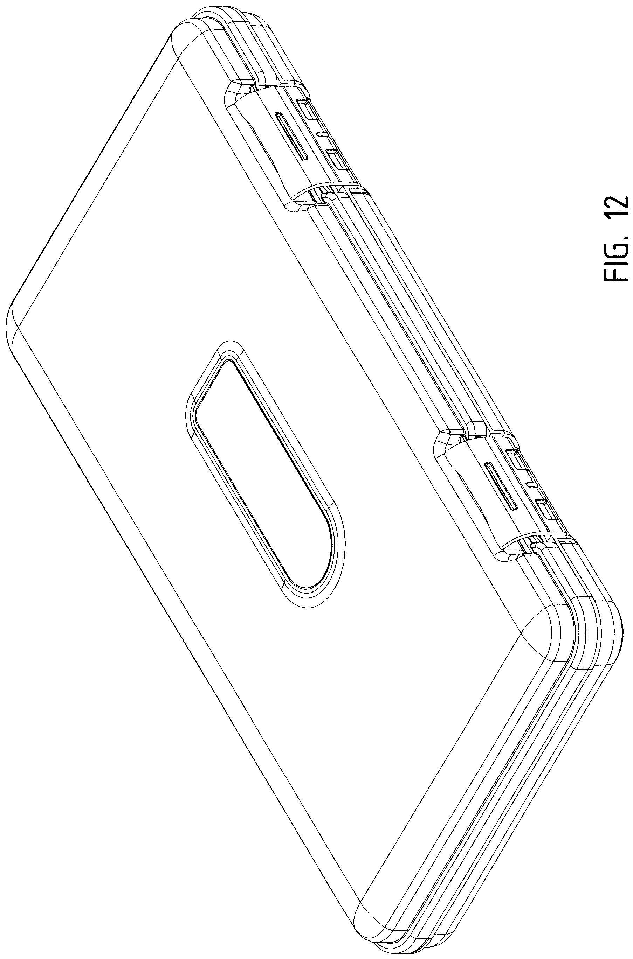

Figure 12 is a perspective view from above of the container shown in Figure 1 and in a closed condition;

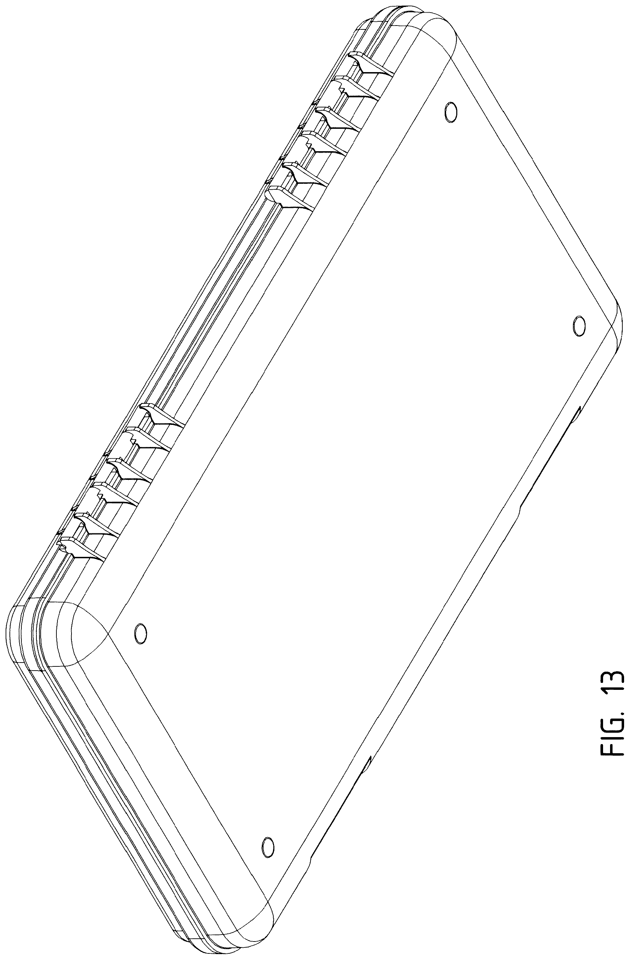

Figure 13 is a perspective view from below of the container as shown in Figure 12;

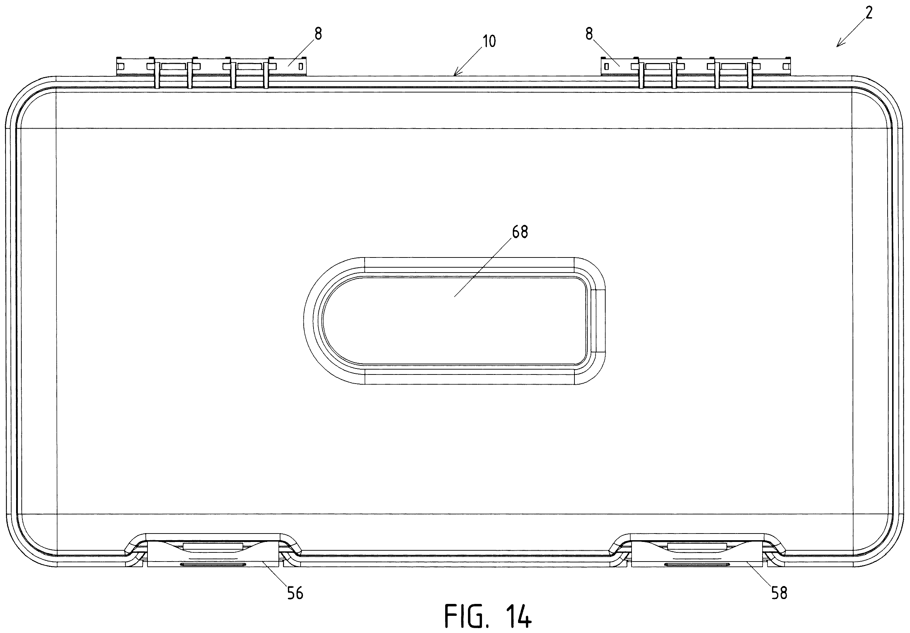

Figure 14 is a top view of the container shown in Figure 12;

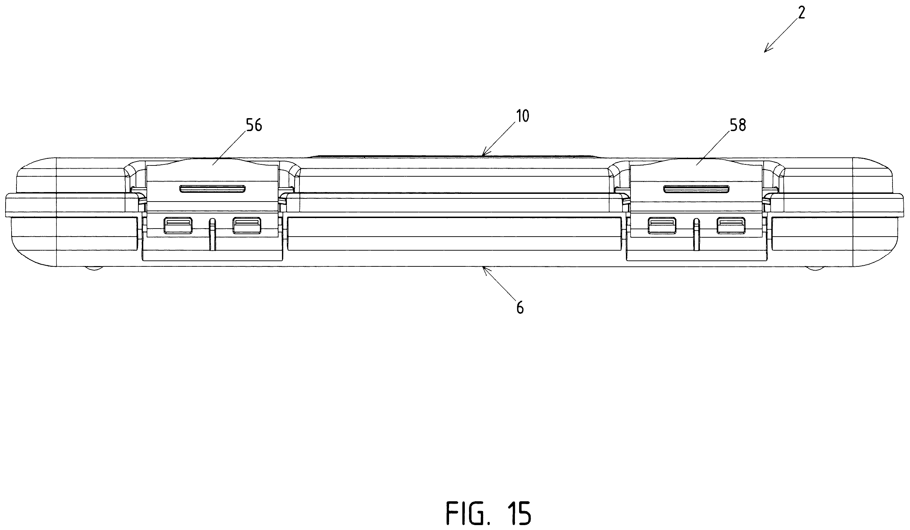

Figure 15 is a front end view of the container as shown in Figure 12; and

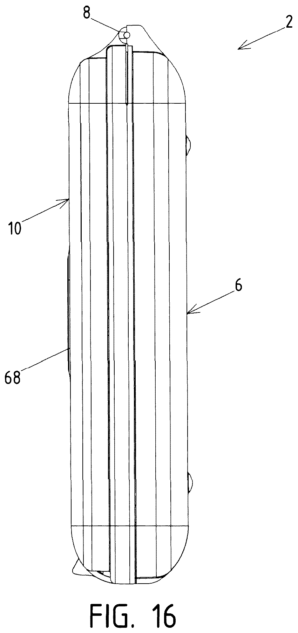

Figure 16 is a side end view of the container as shown in Figure 12.

Referring to drawings, there is shown a container 2 for storing and displaying angling rigs 4 for use by anglers. The container 2 comprises a first container part 6 which is hinged by hinges 8 to a second container part 10. The container 2 also comprises a plurality of mounting formations 12 which are arranged in rows 14 in the first and second container parts 6, 10, and which are for receiving the angling rigs 4. The first container part 6 has two of the rows 14 of the mounting formations 12. The second container part 10 also has two of the rows 14 of the mounting formations 12. The mounting formations 12 are adjustable in the first and second container parts 6, 10.

The container 2 includes slide formations 16 in the first and second container parts 6, 10. The mounting formations 12 are slideable on the slide formations 16. The slide formations 16 extend longitudinally in the first and second container parts 6, 12. The slide formations 16 are arranged in pairs. As shown, each pair of the slide formations 16 is spaced apart. Each pair of the slide formations 16 receives a plurality of the mounting formations 12. A first end portion 18 of each of the plurality of mounting formations 12 fits on one of the pair of slide formations 16. A second end portion 20 of each of the plurality of mounting formations 12 fits on the other one of the pair of slide formations 16.

The slide formations 16 are interrupted along their length by interrupting members 22. The interrupting members 22 cause the mounting formations 12 to be incrementally adjustable in position along the slide formations 16 for receiving different lengths of the angling rigs 4. The interrupting members 12 are in the form of abutment members which extend from one side of the slide formations 16 as shown. In alternative embodiments of the invention (not shown), the interrupting members 22 may extend from the other side of the slide formations 16, or from both sides of the slide formations 16.

The mounting formations 12 comprise recesses 24 for receiving the slide formations 16.

The mounting formations 12 comprise upstanding post members 26 for receiving component parts of the angling rigs 4.

The container 2 includes a first frame 28 which is in the first container part 6. The first frame 28 extends around the internal periphery of the first container part 6. The container 2 also includes a second frame 30 which is in the second container part 10. The second frame 30 extends around the internal periphery of the second container part 10. The first frame 28 comprises a first measurement scale 32. The first measurement scale 32 is in imperial units and it shows inch measurements from 2-15 inches.

The second frame 30 comprises a second measurement scale 34. The second measurement scale 34 is also in imperial units, and it shows the distance from 2-15 inches but going in the opposite direction to the first measurement scale 32. Alternatively, if desired, one or both of the imperial units may be in metric units. The first measurement scale 32 enables a user to know the distance apart of the mounting formations 12 in the first container part 6. Similarly, the second measurement scale 34 enables the user to know the distance apart of the mounting formations in the second container part 10. The measurement scales may be in one or both of the first and second container parts 6,10, and the measurement scales can run from either end of the container parts 6, 10.

The first frame 28 comprises first post members 36 at each end. The first post members 36 at each end of the first frame 28 are for receiving component parts of the angling rigs 4.

The second frame 30 comprises second post members 38 at each end. The second post members at each end of the second frame 30 are also for receiving component parts of the angling rigs 4.

The first frame 28 comprises a first frame member 40 which is positioned inwardly of the periphery of the first frame 28 and which extends along the length of the first frame 28. The second frame 30 comprises a second frame member 42 which is positioned inwardly of the periphery of the second frame 30 and which extends along the length of the second frame 30.

The first frame member 40 comprises a plurality of third post members 44 for receiving component parts of the angling rigs 4. The first frame member 40 also comprises a plurality of first slots 46 for receiving component parts of the angling rigs 4. The second frame member 42 includes a plurality of second slots 48 for receiving component parts of the angling rigs 4.

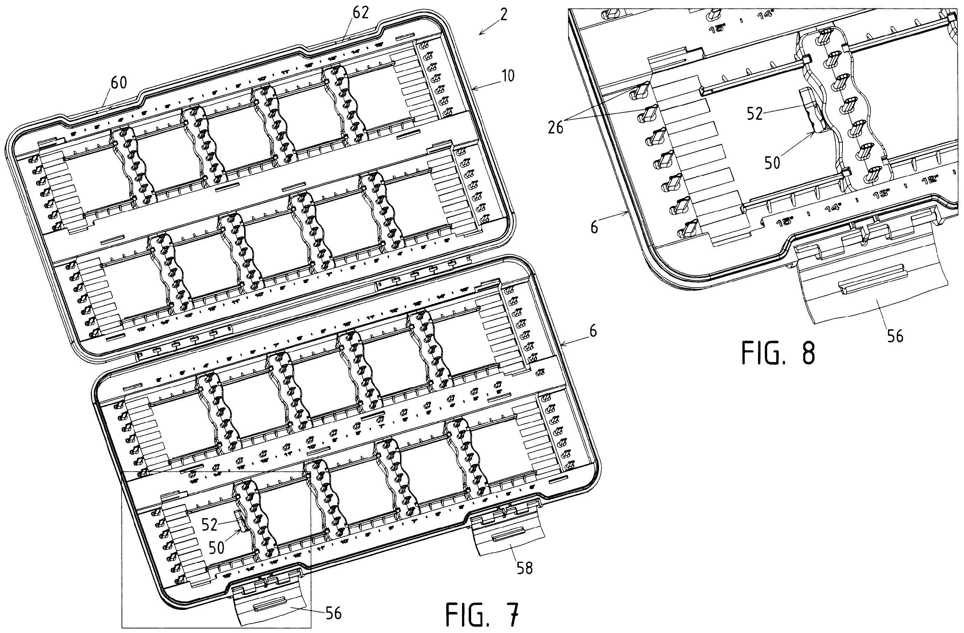

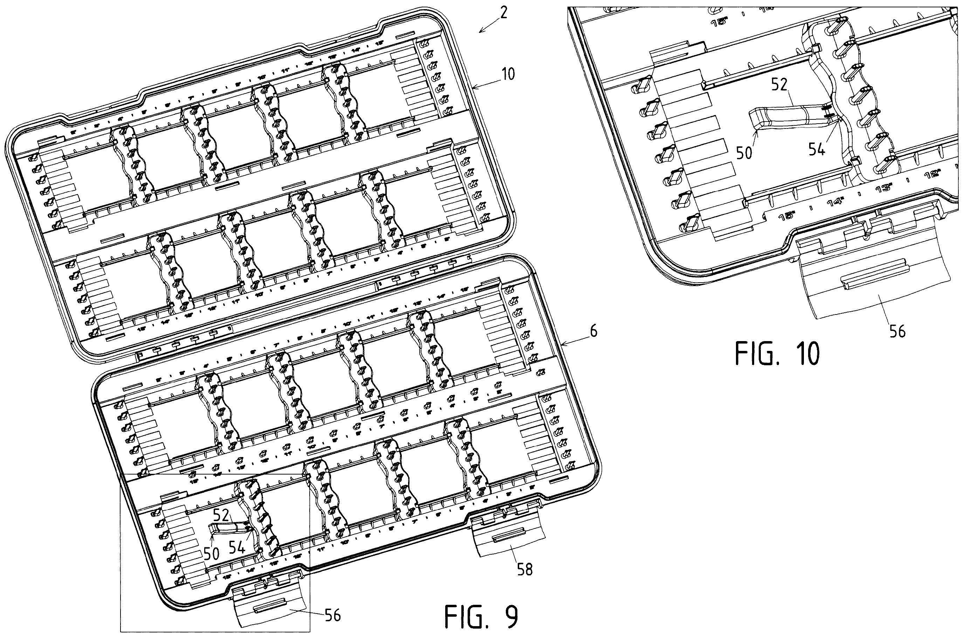

As shown in Figure 7 - 10, the container 2 comprises a release tool 50 for removing the mounting formations 12 from the first and container parts 6, 10. The release tool 50 is a hand held lever comprising a shank 52 which is for enabling the release tool 50 to be held, and a hook 54 which is at one end of the shank 52 and which is for hooking under the mounting formations 12 in order to remove the mounting formations 12 from their positions on the slide formations 16. The removed mounting formations 12 can then be repositioned where desired on the slide formations 16.

As shown in the drawings, the container 2 is in the form of a case. The container 2 is able to be closed by virtue of locking clips 56, 58 which clip into receiver formations 60, 62 respectively.

The container 2 is able to be moulded from plastics materials so that the container 2 is easily manufactured, light to carry, and easy to keep clean.

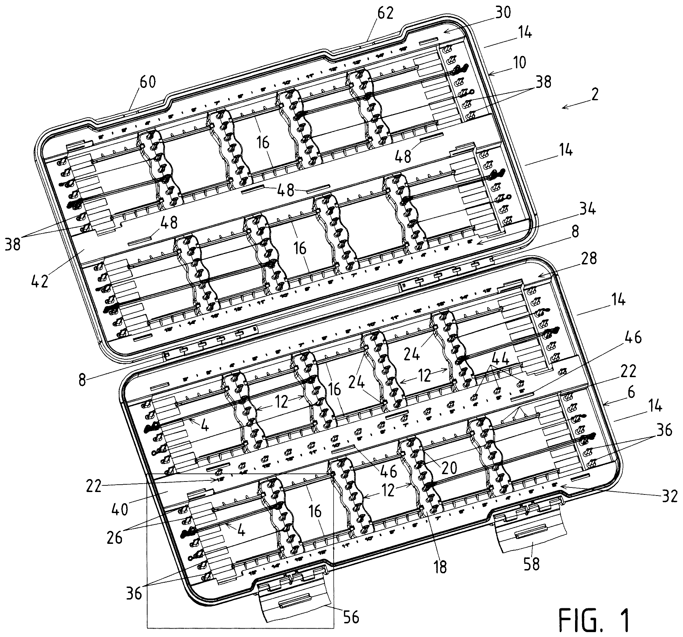

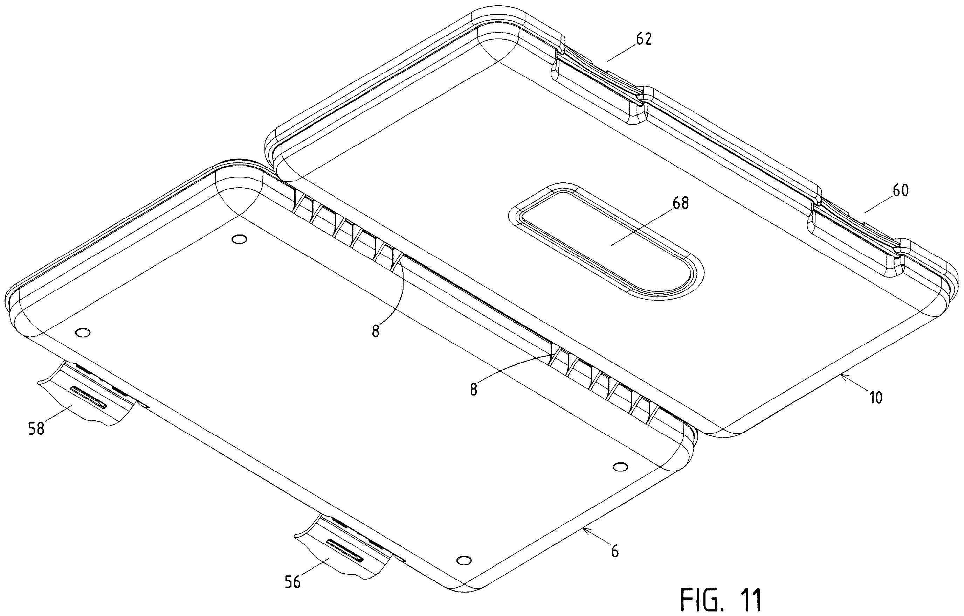

It is to be appreciated that the embodiments of the invention described above with reference to the accompanying drawings have been given by way of example only and that modifications may be effected. Thus, for example, the container 2 may be of other shapes. The container 2 may contain other types of mounting formations 12, slide formations 16 and interrupting members 22. As shown in Figure 11, the second container part 10 may be provided with a recessed handle formation 68. As shown in Figure 1, the post members 26 are receiving hooks forming part of angling rigs 4. The post members 26 may be of other shapes and they may receive other component parts of angling rigs 4. Individual components shown in the drawings are not limited to use in their drawings and they may be used in other drawings and in all aspects of the invention.

## Claims

1. A container (2) for storing and displaying angling rigs (4) for use by anglers, which container comprises:
(i) a first container part (6) which is hinged to a second container part (10); and
(ii) a plurality of mounting formations (12) which are arranged in rows in the first and second container parts (6, 10) and which are for receiving the angling rigs (4),
and the container (2) being such that:
(iii) the mounting formations (12) are slideably adjustable in the first and second container parts (6, 10);
(iv) the container (2) includes slide formations (16) in the first and second container parts (6, 10);
(v) the mounting formations (12) are slideable on the slide formations (16); and
(vi) the slide formations (16) are interrupted along their length by interrupting members which cause the mounting formations (12) to be incrementally adjustable in position along the slide formations (16) for receiving different lengths of the angling rigs (4); and
(vii) the slide formations (16) are arranged in pairs, each pair of the slide formations (16) is spaced apart, each pair of the slide formations (16) receives a plurality of the mounting formations (12), a first end portion (18) of each of the plurality of mounting formations (12) fits on one of the pair of the slide formations (16), and a second end portion (20) of each of the plurality of mounting formations (12) fits on the other one of the pair of the slide formations (16).

2. A container (2) according to claim 1 in which the slide formations (16) extend longitudinally in the first and second container parts (6, 10).

3. A container (2) according to claim 1 or claim 2 in which the interrupting members (22) are abutment members which extend from one side of the slide formations (16).

4. A container (2) according to any one of the preceding claims in which the mounting formations (12) comprise recesses (24) for receiving the slide formations (16).

5. A container (2) according to any one of the preceding claims in which the mounting formations (12) comprise upstanding post members (26) for receiving component parts of the angling rigs (4).

6. A container (2) according to any one of the preceding claims and including a first frame (28) which is in the first container part (6) and which extends around the internal periphery of the first container part (6), a second frame (30) which is in the second container part (10) and which extends around the internal periphery of the second container part (10), in which the first frame (28) comprises a first measurement scale (32) for enabling a user to know the distance apart of the mounting formations (12) in the first container part (6), and in which the second frame (30) comprises a second measurement scale (34) for enabling the user to know the distance apart of the mounting formations (12) in the second container part (10).

7. A container (2) according to claim 6 in which the first frame (28) comprises first post members (36) at each end, with the first post members (36) being for receiving component parts of the angling rigs (4), and in which the second frame (30) comprises second post members (38) at each end, with the second post members (38) being for receiving component parts of the angling rigs (4).

8. A container (2) according to claim 6 or claim 7 in which the first frame (28) comprises a first frame member (40) which is positioned inwardly of the periphery of the first frame (28) and which extends the length of the first frame (28), and in which the second frame (30) comprises a second frame member (42) which is positioned inwardly of the periphery of the second frame (30) and which extends along the length of the second frame (30).

9. A container (2) according to any one of claims 6 - 8 in which the first frame member (40) comprises a plurality of third post members (44) for receiving component parts of the angling rigs (4).

10. A container (2) according to any one of claims 6 - 9 in which the first frame member (40) comprises a plurality of first slots (46) for receiving component parts of the angling rigs (4).

11. A container (2) according to any one of claims 6 - 10 in which the second frame member (42) includes a plurality of second slots (48) for receiving component parts of the angling rigs (4).

12. A container (2) according to any one of the preceding claims and including a release tool (50) for removing the mounting formations (12) from the first and second container parts (6, 10).

13. A container (2) according to claim 12 in which the release tool (50) is a hand held lever comprising a shank (52) which is for enabling the release tool (50) to be held, and a hook (54) which is at one end of the shank (52) and which is for hooking under the mounting formations (12) in order to remove the mounting formations (12).

14. A container (2) according to any one of the preceding claims in which the container (2) is in the form of a case.

## Patentansprüche

1. Behälter (2) zum Aufbewahren und Ausstellen von Angelausrüstungen (4) zur Verwendung durch Angler, wobei der Behälter Folgendes umfasst:
(i) ein erstes Behälterteil (6), das an einem zweiten Behälterteil (10) angelenkt ist; und
(ii) eine Vielzahl von Montagegestaltungen (12), die in Reihen in dem ersten und dem zweiten Behälterteil (6, 10) eingerichtet sind und die zum Aufnehmen der Angelausrüstungen (4) bestimmt sind,
und wobei der Behälter (2) derart ist, dass:
(iii) die Montagegestaltungen (12) verschiebbar in dem ersten und dem zweiten Behälterteil (6, 10) einstellbar sind;
(iv) der Behälter (2) Schiebegestaltungen (16) in dem ersten und dem zweiten Behälterteil (6, 10) beinhaltet;
(v) die Montagegestaltungen (12) auf den Schiebegestaltungen (16) verschiebbar sind; und
(vi) die Schiebegestaltungen (16) entlang ihrer Länge durch Unterbrechungselemente unterbrochen sind, die die Montagegestaltungen (12) veranlassen, inkrementell in Position entlang der Schiebegestaltungen (16) einstellbar zu sein, um unterschiedliche Längen der Angelausrüstungen (4) aufzunehmen; und
(vii) die Schiebegestaltungen (16) in Paaren eingerichtet sind, jedes Paar der Schiebegestaltungen (16) beabstandet ist, jedes Paar der Schiebegestaltungen (16) eine Vielzahl der Montagegestaltungen (12) aufnimmt, ein erster Endabschnitt (18) jeder der Vielzahl von Montagegestaltungen (12) auf eine des Paares von Schiebegestaltungen (16) passt, und ein zweiter Endabschnitt (20) jeder der Vielzahl von Montagegestaltungen (12) auf die andere des Paares von Schiebegestaltungen (16) passt.

2. Behälter (2) nach Anspruch 1, wobei sich die Schiebegestaltungen (16) in Längsrichtung in dem ersten und dem zweiten Behälterteil (6, 10) erstrecken.

3. Behälter (2) nach Anspruch 1 oder Anspruch 2, wobei die Unterbrechungselemente (22) Anschlagelemente sind, die sich von einer Seite der Schiebegestaltungen (16) erstrecken.

4. Behälter (2) nach einem der vorstehenden Ansprüche, wobei die Montagegestaltungen (12) Vertiefungen (24) zum Aufnehmen der Schiebegestaltungen (16) umfassen.

5. Behälter (2) nach einem der vorstehenden Ansprüche, wobei die Montagegestaltungen (12) aufrechte Stützenelemente (26) zum Aufnehmen von Bestandteilen der Angelausrüstungen (4) umfassen.

6. Behälter (2) nach einem der vorstehenden Ansprüche und der einen ersten Rahmen (28) beinhaltet, der sich in dem ersten Behälterteil (6) befindet und der sich um den Innenumfang des ersten Behälterteils (6) erstreckt, einen zweiten Rahmen (30), der sich in dem zweiten Behälterteil (10) befindet und der sich um den Innenumfang des zweiten Behälterteils (10) erstreckt, wobei der erste Rahmen (28) eine erste Messskala (32) umfasst, um es einem Benutzer zu ermöglichen, den Abstand der Montagegestaltungen (12) in dem ersten Behälterteil (6) zu kennen, und wobei der zweite Rahmen (30) eine zweite Messskala (34) umfasst, um es dem Benutzer zu ermöglichen, den Abstand der Montagegestaltungen (12) in dem zweiten Behälterteil (10) zu kennen.

7. Behälter (2) nach Anspruch 6, wobei der erste Rahmen (28) erste Stützenelemente (36) an jedem Ende umfasst, wobei die ersten Stützenelemente (36) zum Aufnehmen von Bestandteilen der Angelausrüstungen (4) bestimmt sind, und wobei der zweite Rahmen (30) zweite Stützenelemente (38) an jedem Ende umfasst, wobei die zweiten Stützenelemente (38) zum Aufnehmen von Bestandteilen der Angelausrüstungen (4) bestimmt sind.

8. Behälter (2) nach Anspruch 6 oder Anspruch 7, wobei der erste Rahmen (28) ein erstes Rahmenelement (40) umfasst, das nach innen von dem Umfang des ersten Rahmens (28) positioniert ist und das sich über die Länge des ersten Rahmens (28) erstreckt, und wobei der zweite Rahmen (30) ein zweites Rahmenelement (42) umfasst, das nach innen von dem Umfang des zweiten Rahmens (30) positioniert ist und das sich entlang der Länge des zweiten Rahmens (30) erstreckt.

9. Behälter (2) nach einem der Ansprüche 6 - 8, wobei das erste Rahmenelement (40) eine Vielzahl dritter Stützenelemente (44) zum Aufnehmen von Bestandteilen der Angelausrüstungen (4) umfasst.

10. Behälter (2) nach einem der Ansprüche 6 - 9, wobei das erste Rahmenelement (40) eine Vielzahlerster Schlitze (46) zum Aufnehmen von Bestandteilen der Angelausrüstungen (4) umfasst.

11. Behälter (2) nach einem der Ansprüche 6 - 10, wobei das zweite Rahmenelement (42) eine Vielzahl zweiter Schlitze (48) zum Aufnehmen von Bestandteilen der Angelausrüstungen (4) umfasst.

12. Behälter (2) nach einem der vorstehenden Ansprüche und der ein Freigabewerkzeug (50) zum Entfernen der Montagegestaltungen (12) aus dem ersten und dem zweiten Behälterteil (6, 10) beinhaltet.

13. Behälter (2) nach Anspruch 12, wobei das Freigabewerkzeug (50) ein handgehaltener Hebel ist, der einen Schaft (52), der zum Ermöglichen des Haltens des Freigabewerkzeugs (50) bestimmt ist, und einen Haken (54) umfasst, der sich an einem Ende des Schafts (52) befindet und der zum Einhaken unter den Montagegestaltungen (12) bestimmt ist, um die Montagegestaltungen (12) zu entfernen.

14. Behälter (2) nach einem der vorstehenden Ansprüche, wobei der Behälter (2) die Form eines Gehäuses aufweist.

## Revendications

1. Contenant (2) pour stocker et exposer des équipements de pêche à la ligne (4) destinés à être utilisés par des pêcheurs à la ligne, lequel contenant comprend :
(i) une première partie de contenant (6) qui est articulée sur une seconde partie de contenant (10) ; et
(ii) une pluralité de formations de montage (12) qui sont agencées en rangées dans les première et seconde parties de contenant (6, 10) et qui sont destinées à recevoir les équipements de pêche à la ligne (4),
et le contenant (2) étant tel que :
(iii) les formations de montage (12) peuvent être réglées de manière coulissante dans les première et
seconde parties de contenant (6, 10) ;
(iv) le contenant (2) inclut des formations coulissantes (16) dans les première et seconde parties de contenant (6, 10) ;
(v) les formations de montage (12) peuvent coulisser sur les formations coulissantes (16) ; et
(vi) les formations coulissantes (16) sont interrompues sur leur longueur par des éléments d'interruption qui amènent les formations de montage (12) à pouvoir être réglées par incréments en position le long des formations coulissantes (16) pour recevoir différentes longueurs des équipements de pêche à la ligne (4) ; et
(vii) les formations coulissantes (16) sont agencées par paires, chaque paire des formations coulissantes (16) est espacée, chaque paire des formations coulissantes (16) reçoit une pluralité de formations de montage (12), une première portion d'extrémité (18) de chacune de la pluralité de formations de montage (12) s'adapte sur l'une des paires de formations coulissantes (16), et une seconde portion d'extrémité (20) de chacune de la pluralité de formations de montage (12) s'adapte sur l'autre de la paire de formations coulissantes (16).

2. Contenant (2) selon la revendication 1 dans lequel les formations coulissantes (16) s'étendent longitudinalement dans les première et seconde parties de contenant (6, 10).

3. Contenant (2) selon la revendication 1 ou la revendication 2 dans lequel les éléments d'interruption (22) sont des éléments de butée qui s'étendent depuis un côté des formations coulissantes (16).

4. Contenant (2) selon l'une quelconque des revendications précédentes dans lequel les formations de montage (12) comprennent des évidements (24) pour recevoir les formations coulissantes (16).

5. Contenant (2) selon l'une quelconque des revendications précédentes dans lequel les formations de montage (12) comprennent des éléments montants verticaux (26) pour recevoir des pièces composantes des équipements de pêche à la ligne (4).

6. Contenant (2) selon l'une quelconque des revendications précédentes et incluant un premier cadre (28) qui se situe dans la première partie de contenant (6) et qui s'étend autour de la périphérie interne de la première partie de contenant (6), un second cadre (30) qui se situe dans la seconde partie de contenant (10) et qui s'étend autour de la périphérie interne de la seconde partie de contenant (10), dans lequel le premier cadre (28) comprend une première échelle de mesure (32) permettant à un utilisateur de connaître la distance entre les formations de montage (12) dans la première partie de contenant (6), et dans lequel le second cadre (30) comprend une seconde échelle de mesure (34) permettant à l'utilisateur de connaître la distance entre les formations de montage (12) dans la seconde partie de contenant (10).

7. Contenant (2) selon la revendication 6 dans lequel le premier cadre (28) comprend des premiers éléments montants (36) à chaque extrémité, les premiers éléments montants (36) servant à recevoir des pièces composantes des équipements de pêche à la ligne (4), et dans lequel le second cadre (30) comprend des deuxièmes éléments montants (38) à chaque extrémité, les deuxièmes éléments montants (38) servant à recevoir des pièces composantes des équipements de pêche à la ligne (4).

8. Contenant (2) selon la revendication 6 ou la revendication 7 dans lequel le premier cadre (28) comprend un premier élément de cadre (40) qui est positionné vers l'intérieur de la périphérie du premier cadre (28) et qui s'étend sur la longueur du premier cadre (28), et dans lequel le second cadre (30) comprend un second élément de cadre (42) qui est positionné vers l'intérieur de la périphérie du second cadre (30) et qui s'étend sur la longueur du second cadre (30).

9. Contenant (2) selon l'une quelconque des revendications 6 à 8 dans lequel le premier élément de cadre (40) comprend une pluralité de troisièmes éléments montants (44) pour recevoir des pièces composantes des équipements de pêche à la ligne (4).

10. Contenant (2) selon l'une quelconque des revendications 6 à 9 dans lequel le premier élément de cadre (40) comprend une pluralité de premières fentes (46) pour recevoir des pièces composantes des équipements de pêche à la ligne (4).

11. Contenant (2) selon l'une quelconque des revendications 6 à 10 dans lequel le second élément de cadre (42) inclut une pluralité de secondes fentes (48) pour recevoir des pièces composantes des équipements de pêche à la ligne (4).

12. Contenant (2) selon l'une quelconque des revendications précédentes et incluant un outil de libération (50) pour retirer les formations de montage (12) des première et seconde parties de contenant (6, 10).

13. Contenant (2) selon la revendication 12 dans lequel l'outil de libération (50) est un levier tenu à la main comprenant une tige (52) qui est destinée à permettre à l'outil de libération (50) d'être tenu, et un crochet (54) qui se situe à une extrémité de la tige (52) et qui est destiné à être accroché en dessous des formations de montage (12) afin de retirer les formations de montage (12).

14. Contenant (2) selon l'une quelconque des revendications précédentes dans lequel le contenant (2) se présente sous la forme d'un coffret.
